# NEW EUROPEAN PATENT SPECIFICATION

(11) **EP 1 862 518 B2**
(45) Date of publication and mention of the opposition decision: **26.11.2014**
(45) Mention of the grant of the patent: 29.04.2009
(21) Application number: 07010352.8
(22) Date of filing: 24.05.2007
(51) Int. Cl.: C09J 7/02, B65C 9/20

(54) **Use of plastic film adhesive bands**
Verwendung von Kunststofffolienklebebändern
Utilisation de bandes adhésives de film plastique

(30) Priority: 01.06.2006 IT MI20061081
(43) Date of publication of application: 05.12.2007
(73) Proprietor: Irplast S.p.A., 50053 Empoli (FI) (IT)
(72) Inventor: Di Tommaso, Agapito, 80127 Napoli (IT); Finocchiaro, Stefano, 50065 Pontassieve (FI) (IT); Soluri, Giacomo, 50053 Empoli (FI) (IT)
(74) Representative: Sama, Daniele

(56) References cited:
- EP-A- 1 074 593
- EP-B1- 0 928 273
- JP-A- H08 143 016
- JP-A- H09 301 333
- US-A- 3 959 065
- US-A1- 2003 152 722
- US-A1- 2006 057 370
- KIRK-OTHMER: 'Encyclopedia of Chemical Technology', vol. 9, 1966, JOHN WILEY & SONS,INC deel 'Ferroelectrics to Foams', pages 220 - 232
- HANSJÜRGEN SAECHTLING: 'Manuale Delle Materie Plastiche', vol. 9, 2006, TECNICHE NUOVE, MILANO deel KARL OBERBACH ET AL., pages 398 - 399
- 'Werkstoff-Führer Kunststoffe', vol. 9, 2004, CARL HANSER VERLAG, MÜNCHEN deel WALTER HELLERISCH ET AL.: '10.1.2 Polypropylen PP', pages 87 - 89

## Description

The present invention relates to the use of plastic film adhesive bands having adhesive applied according to transversal sections with respect to the tape unwinding direction or according to defined sectors, to label containers or various types of articles on high speed manufacturing lines, working for example at a speed higher than 6,000 packages/- hour, preferably higher than 8,000 packages/hour and with a number of scraps lower than 2%, preferably lower than 1%.

By application on a tape of an adhesive according to defined sectors it is meant that on a tape surface areas of a definite shape surrounded by non adhesivized areas, are obtained.

More specifically the present- invention relates to the use of plastic film adhesive bands having also very high lengths, higher than 1,000 meters, suitable to be wound in rolls for easy industrial use.

The use of plastic films to label containers is known in the prior art. For example it is well known the use of pressure sensitive adhesive free plastic films in processes for labelling containers or various type of articles on manufacturing lines working also at high speeds, generally higher than 6,000 packages/hour, in particular higher than 8,000 packages/hour. For example in the process called "roll-feed" applicable to labels, heat-shrinkable or not, the adhesive free printed plastic film roll is unwound and the label is cut. On the latter a hot-melt adhesive (optionally UV-crosslinkable) is applied according to a defined pattern and then applied on the container. This process, quite used in the art, shows however the following drawbacks:
- a hot-melt adhesive application system needs a continous control, since losses of melt adhesive or shift in the adhesive application register may take place, or also thermal degradation of the adhesive, in particular during downtime, may occur;
- in case of a shift in the adhesive application register, the label edges may be not uniformly coated with adhesive, and therefore the label application to the container is not correct. The pieces with these defects are not accepted by the market.
- when a UV-crosslinkable adhesive is used, UV radiation lamps are necessary with consequent additional installation and maintenance costs;
- in the latter case, a further drawback is represented by the need to precisely dose the UV radiant energy amount transferred to the adhesive, since it can change from the lamp type, the efficiency of the lamp, the ageing of the lamp and from line operating speed. Also in this case the label adhesion to the packaging can be not optimal or vary along the time and therefore with a poor reliability.

Due to these drawbacks the scraps/rejects of this prior art process are high, generally of the order of 5%. Therefore this requests the recovery of the scraps and therefore the use of further production units. In the alternative the scraps must be disposed of by observing the strict rules for their disposal. Additional costs are unavoidable also in this case.

Another process, used only for the application of heat-shrinkable labels, is the so called "sleeve" process generally comprising the following steps: unwinding of a printed heat sealed plastic film roll having a tubular shape and free from pressure sensitive adhesive and thus obtaining a sleeve, sleeve cutting, and its application to the container (generally by using air or mechanical systems), final heat-shrinking to obtain the adhesion of the sleeve to the container. This process is expensive from an economic point of view since the tubular film used must be obtained through a process employing folding and heat sealing. It has to be remarked that the latter process is not necessary in the roll-feed process. Besides, the sleeve process is not generally applicable to manufacturing lines working at speeds higher than 6,000 packages/hour, preferably 8,000 packages/hour. Furthermore this sleeve process generally requires the use of high density plastic films, for example having a density higher than 1.2 g/cm³ . Said films have a high cost for surface unit.

In patent application EP 1,074,593 in the name of the Applicant plastic film adhesive bands are described with adhesive applied according to patterns transversal with respect to the tape unwinding direction, or according to defined areas, usable to label containers or articles of various types. In the Examples the automatic application of self-adhesive labels on containers is described. The maximum speed of the label application exemplified is not higher than 90 cycles (packages)/minute, which correspond to 5,400 packages/hour. -

The use of non adhesivized plastic film rolls, normally used in "roll-feed" applications, allows to reach high manufacturing speeds, higher than 6,000 packages/hour, preferably higher than 8,000 packages/hour, since the film unwinding from the roll is uniform. This occurs as the film surfaces are substantially homogeneous as regards their sliding properties and also in view of the absence of the adhesive on the film surface. Therefore the use of non adhesivized plastic film rolls makes easier the application of labels on high speed lines. This explains their extended use for the package labelling.

The need was felt to have available printed plastic films in rolls, to be used in the high speed labelling process, for example higher than 6,000 packages/hour, preferably higher than 8,000 packages/hour, combined with scraps lower than 2%, preferably lower than 1%, in order to reduce them compared with the printed plastic films presently used for this application.

The Applicant has surprisingly and unexpectedly found a printed plastic film solving this technical problem.

The object of the present invention is the use according to claim 1 wherein the use of plastic film adhesive bands of bioriented heat-shrinkable polypropylene polymers with application of pressure-sensitive adhesive according to transversal sections with respect to the unwinding direction of the roll or the longitudinal direction of the tape, or according to definite areas, for roll-feed labelling process of containers or of various types of articles on high speed maufacturing lines, the speed being higher than 6,000 packages/hour, preferably higher than 8,000 packages/-hour, combined with scraps lower than 2%, preferably lower than 1% on the total production lot.

By propylene polymers, homopolymers and/or copolymers of the propylene with ethylene and/or linear or branched *α-*olefins, having a number of carbon atoms between 4 and 10, preferably from 4 to 6, are meant. Coextruded films of said polymeric materials can also be used.

Preferably the plastic film used is based on homopolymer, wherein the surface to be coated with adhesive has been previously subjected to treatments to increase the surface tension thereof, so as to provide a high adhesion of inks and adhesives. Examples of these treatments are well known and are the corona, flame, plasma treatments, etc.

Preferably the films of the present invention have not an antiadhesive coating on the external surface of the band (the surface which is not coated with adhesive).

The plastic films according to the present invention have a density in the range 0.850 and 0.950 g/cm³.

The usable "pressure sensitive"-adhesives are those known in the art. Preferably they are adhesive aqueous emulsions, preferably aqueous emulsions of acrylic polymers. Generally the viscosity of the emulsions is between 0,05 and 1 Pa.s (50 and 1,000 cP), preferably 0,1-0,5 Pa.s (100-500 cP), at the application temperature between 0°C and 60°C, preferably 20°C-40°C.

The (dry) adhesive weight per unit surface area on the coated part is generally between 5 and 50 g/m², preferably 10-30 g/m² .

The length of the adhesivized band measured in the tape longitudinal direction, herein called MD (machine direction), is generally lower than or equal to 25%, preferably lower than or equal to 15% with respect to the total length of the label.

The adhesive bands of the invention can have also very high lengths, even higher than 1,000 meters, preferably lower than 10,000 meters, and can be wound in rolls for easy industrial use.

The width of the bands of the invention is typically between about 2 cm and about 50 cm.

The label cutting length is typically comprised between about 10 cm and 1 m, and the areas with adhesive repeated in register with the label cutting length have a length in MD typically between 1 cm and 10 cm. The expression "areas with adhesive repeated in register with the label cutting length" means that the adhesive coated areas are separated each from the other by a distance equal to the repetition length of the label. In alternative, the areas with adhesive are defined sectors having sizes as above.

MD Uniaxial heat-shrinkable plastic films are used.

The heat-shrink values in MD, determined by the OPMA TC 4 (Oriented Polypropylene Manufacturers' Association) heat-shrink test (130°C - 5 minutes in air), are comprised between 5% and 70% and preferably between 5% and 40%, at temperatures in the range 60°C-200°C, preferably 80°C-140°C. These features allow the label heat shrink after its application, while the labelled package passes in the heat-shrink tunnel to obtain an adherent labelling conforming to concave, convex or irregular surfaces.

For the use in the "roll-feed" process according to the present invention the film is preferably wound in rolls.

The use of plastic film bands according to the "roll-feed" process of the present invention to label containers or various types of articles on high speed manufacturing lines, working at a speed higher than 6,000 packages/hour, preferably higher than 8,000 packages/hour, up to 30,000 packages/hour, even up to 50,000 packages/hour is performed, by using labelling machines commonly used in high speed applications. This process -comprises the following steps:
1) unwinding of the printed plastic film roll coated with pressure-sensitive adhesive according to transversal sections with respect to the tape direction, or at definite sectors;
2) tape cutting to obtain the desired label;
3) label application on the container;
4) label heat-shrink by passing the labelled article in a heat-shrink tunnel (oven) at temperatures between 60°C and 200°C;
wherein, in order to unwind the roll and to apply the label, an equipment is used with the moving parts that are in contact with the "pressure-sensitive" adhesive having an antiadhesive surface.

The latter, can for example be obtained by coating the surface with antiadhesive materials (PTFE, silicone rubbers) or by specific treatments, for example "plasma coating".

The adhesive bands of the invention can be produced according to the process described in EP 1,074,593 in the name of the Applicant. They can be subjected to processes allowing an easy label removal from the container. Said processes are the pressure cutting process, the formation of nicks in definite positions on the edge of the band, laser nicks, application of tear tapes. These processes can be carried out during the adhesive band preparation, before winding them in rolls, or directly during the application step.

The Applicant has unexpectedly and surprisingly found that rolls formed by partially adhesivized plastic films notwithstanding showing a non uniform unwinding due to, the presence of adhesive-coated areas, can be used in high speed applications, higher than 6,000 packages/hour, in particular higher than 8,000 packages/hour. The presence of adhesive bands on the plastic film does not cause unexpectedly and surprisingly either line jamming or scraps higher than 2%, using the labelling machines conventionally used for these high speed applications. This fact is surprising and unexpected since the plastic film adhesive bands described in the patent application EP 1,074,593 were exemplified with a maximum application speed of 5,400 packages/hour.

Therefore according to the present invention it is possible to use on high speed manufacturing lines adhesive band rolls known in the prior art in applications at a speed higher than 6,000 packages/hour. This represents an advantage from an industrial point of view.

The labelled packages, for example bottles, obtainable with the "roll-feed" process of the invention satisfy the specific requirements of the customers. In particular it was noted that adhesion of the heat shrink label to the bottle profile was complete and uniform. Furthermore, the part where the two edges of the label overlap, does not show any defect due to local ungluing and partial film lifting, or folds due to the presence of the adhesive.

By comparing the results obtained with the adhesivized films of the invention and the non adhesivized films conventionally used in the prior art, it can be observed that the process of the invention, notwithstanding using an adhesivized tape, allows to reach substantially the same speeds as those reachable with the conventional "roll-feed" labelling process. This constitutes a remarkable advantage of the process of the present invention for the users, who have not to apport substantial modifications into the manufacturing lines of the conventional "roll-feed" process using non adhesivized plastic films. This unexpected and surprising result is still more appreciated by the users since it is combined with a substantial reduction of scraps in comparison with the conventional "roll-feed" process using non adhesivized plastic films.

The following Examples illustrate the invention without limiting the scope thereof.

### EXAMPLE 1

The rolls used are of MD heat-shrinkable bioriented polypropylene films having a width-of 245 mm. On the side herein called internal, the film is printed and adhesivized according to transversal sections of 24 mm length measured in MD. Said film rolls were used to obtain labels in an out of line labelling machine (the machine does not apply the labels on containers) PE Labellers^{®}.

The repetition length of the obtained label, measured in MD, was 269 mm.

The weight of acrylic adhesive Acronal^{®} N286 (BASF) (dry), calculated with respect to the unit surface coated with the adhesive of the tape, was 15 g/m² .

The labelling machine working speed was brought from 6,000 cycles (corresponding to 6,000 theoretic packages)/hour up to 25,000 cycles/hour and maintained at this speed for 8 hours and no jamming was noticed.
This example was carried out to investigate the line speeds that can be reached with the films of the invention in a line labelling process.

The obtained results show that the adhesivized film of the invention can be used without jamming at line speeds in the range 6,000-25,000 cycles/hour. The maximum speed was maintained for 8 hours and no jamming, as said, was noticed.

### EXAMPLE 2

The used rolls are of MD heat-shrinkable bioriented polypropylene films, having a width of 245 mm, printed and adhesivized on the internal side at transversal sections of 24 mm length measured in MD. The film rolls were used to obtain labels in a labelling machine PE Labellers^{®} installed on a manufacture line of fruit juices in bottles, equipped with one heat-shrink unit.

The repetition length of the obtained label, measured in MD, was 269 mm.

The weight of acrylic adhesive Acronal^{®} N286 (BASF) (dry), calculated with respect to the unit surface coated with the adhesive of the tape, was 15 g/m² .

The manufacturing line working speed was set at 9,000 bottles/hour, which is the maximum speed at which the bottle filling system used can operate.

This speed was maintained for 2 hours without jamming or scraps.

The labelled bottles conformed to the specifications set out by the customer. In particular it was checked that the adhesion of the heat shrink label to the bottle was both complete and uniform. Besides, on the part of the label wherein the two label edges overlap, no defects, due to local ungluing and consequent partial film lift, or folds caused by the presence of the adhesive, were observed.

### EXAMPLE 3 (comparative)

Example 2 was repeated but using non adhesivized label rolls on which a hot melt UV crosslinkable adhesive is applied according to transversal sections of 12 mm length in MD on the two end label edges, immediately before the application on the bottles.

The used adhesive weight, calculated with respect to the unit surface coated with adhesive, was 15 g/m².

With reference to the used adhesive, it was necessary to install a melting/application line of the adhesive and a UV lamp battery for crosslinking. The time necessary for switching on and setting up the line, before proceeding to label application, was of 45 minutes. The manufacturing line working speed was maintained at 9,000 bottles/hour for 2 hours, as in the Example 2.

At the end of the test it was necessary to carry out the complete cleaning of the melt adhesive dropped on the application line.

A quantity of bottles equal to 5% of the lot produced by the manufacturing line during the two hours of the test was discarded owing to defects due to the adhesive application or to its crosslinking, which caused a partial lifting of the label edges during the heat-shrink step.

Therefore the final product in these cases was not conform with the production specifications.

To the above mentioned scraps must be added also those deriving from the switching on/setting up steps of the equipments of the hot melt UV crosslinkable adhesive application. In this case a number of bottles equal to about 1% of those produced had to be additionally discarded. Therefore the total percentage of scraps/rejects was of about 6%.

### Comments

From the comparison between the Example 2 of the invention and the Example 3 (comparative) it is drawn that the process of the invention, although using an adhesivized tape, allows to reach substantially the same line-speeds as those reached with the normally used "roll-feed" labelling process. This is a remarkable advantage for users who have not to bring substantial variations to the manufacturing lines of the "roll-feed" process using conventional non adhesivized plastic films.

It has to be noticed however that the adhesivized plastic films of the present invention allow to unexpectedly and surprisingly obtain a substantial reduction of scraps in comparison with the conventional "roll-feed" process using non adhesivized plastic films.

## Claims

1. Use for "roll-feed" labelling processes of plastic film adhesive bands of bioriented heat-shrinkable polypropylene polymers, with application of pressure sensitive adhesive according to transversal sections with respect to the unwinding direction of the roll or the longitudinal direction of the tape, or according to definite areas, to label containers or various types of articles on high speed manufacturing lines, higher than 6,000 packages/hour, combined with scraps lower than 2%,
wherein the propylene polymers are homopolymers and/or copolymers of the propylene with ethylene and/or linear or branched α-olefins, having a number of carbon atoms between 4 and 10,
the use comprising the following steps;
1) unwinding of the printed plastic film roll spread with pressure-sensitive adhesive according to transversal sections with respect to the tape direction, or at definite sectors;
2) tape cutting to obtain the label;
3) label application on the container;
4) label heat-shrink by passing the labelled article in a heat-shrink oven at temperatures between 60°C and 200°C;
wherein in order to unwind the roll and apply the label, the moving parts of the used equipment that are in contact with the "pressure-sensitive" adhesive have an antiadhesive surface,
wherein the plastic films show uniaxial heat-shrinking in MD, wherein the heat-shrink values in MD, determined by the OPMA TC 4 (Oriented Polypropylene Manufacturers' Association) heart-shrink test (130°C - 5 minutes in air), are comprised between 5% and 70%,
wherein the label heat shrinks after its application, while the labelled package passes in the-heat-shrink tunnel to obtain an adherent labelling conforming to concave, convex or irregular surfaces.

2. Use according to claim 1, wherein the plastic film is based on homopolymer and the surface to be coated with the adhesive is corona, plasma or flame treated.

3. Use according to claims 1-2, wherein the plastic film has a density in the range 0.850 and 0.950 g/cm³.

4. Use according to claims 1-3, wherein the "pressure sensitive" adhesives are aqueous adhesive emulsions.

5. Use according to claim 4, wherein the viscosity of the adhesive aqueous emulsions is between 0.05-1 Pa·s (50-1,000 cP) at the application temperature between O°C and 60°C.

6. Use according to claims 4-5, wherein the dry adhesive weight per unit surface on the coated part is between 5 and 50 g/m².

7. Use according to claims 4-5, wherein the length of the adhesivized band, measured in the MD longitudinal direction of the tape, is lower than or equal to 25% with respect to the total length of the label.

8. Use according to claims 1-7, wherein the width of the plastic film adhesive bands is between 2 cm and 50 cm.

9. Use according to claims 1-8, wherein the label cutting length is comprised between 10 cm and 1 m.

10. Use according to claims 1-9, wherein the areas with adhesive repeated in register with the label cutting length have a length in MD between 1 cm and 10 cm.

11. Use according to claim 4, wherein the aqueous adhesive emulsions are aqueous emulsions of acrylic polymers.

## Patentansprüche

1. Verwendung für "Rollenablauf"-Etikettierungsverfahren von Kunststofffolien-Klebebändern aus bi-orientierten wärmeschrumpfbaren Polypropylenpolymeren unter Anwendung von Haftkleber entsprechend transversalen Abschnitten bezüglich der Abrollrichtung der Rolle oder der Längsrichtung des Bandes oder entsprechend bestimmten Flächen, um Behälter oder verschiedene Arten von Gegenständen in Hochgeschwindigkeitsproduktionsanlagen, mehr als 6.000 Einheiten/h, verbunden mit einem Ausschuss von weniger als 2%, zu etikettieren, wobei die Propylenpolymere Homopolymere und/oder Copolymere des Propylens mit Ethylen und/oder linearen oder verzweigten α-Olefinen mit einer Anzahl von Kohlenstoffatomen zwischen 4 und 10 sind, wobei die Verwendung die folgenden Schritte umfasst:
1) Abrollen der gedruckten Kunststofffolienrolle, bedeckt mit Haftkleber entsprechend transversalen Abschnitten bezüglich der Bandrichtung oder an bestimmten Sektoren;
2) Bandschneiden, um das Etikett zu erhalten;
3) Etikettaufbringung auf den Behälter;
4) Etikettwärmeschrumpfung durch Führen des etikettierten Gegenstands in einen
Wärmeschrumpfofen bei Temperaturen zwischen 60°C und 200°C;
wobei zur Abrollung der Rolle und zur Aufbringung des Etiketts die sich bewegenden Teile der verwendeten Anlage, die in Kontakt mit dem "Haft"-Kleber sind, eine Antihaftoberfläche aufweisen,
wobei die Wärmeschrumpfwerte in MD, bestimmt durch den OPMA TC 4 (Oriented Polypropylene Manufacturers' Association)-Wärmeschrumpftest (130 °C - 5 Minuten in Luft), zwischen 5% und 70% betragen,
wobei das Etikett nach seiner Aufbringung wärmeschrumpft, während die etikettierte Einheit in den Wärmeschrumpftunnel geführt wird, um eine haftende, konkaven, konvexen oder unregelmäßigen Oberflächen entsprechende Etikettierung zu erreichen.

2. Verwendung nach Anspruch 1, wobei die Kunststofffolie auf einem Homopolymer basiert und die mit dem Klebstoff zu beschichtende Oberfläche Corona-, Plasma- oder Flamm- behandelt ist.

3. Verwendung nach den Ansprüchen 1 bis 2, wobei die Kunststofffolie eine Dichte im Bereich von 0,850 bis 0,950 g/cm³ aufweist.

4. Verwendung nach den Ansprüchen 1 bis 3, wobei die "Haft"-Kleber wässrige Klebstoffemulsionen sind.

5. Verwendung nach Anspruch 4, wobei die Viskosität der wässrigen Klebstoffemulsionen zwischen 0,05-1 Pas (50-1.000 cP) bei einer Anwendungstemperatur zwischen 0 °C und 60 °C ist.

6. Verwendung nach den Ansprüchen 4 - 5, wobei das Klebstofftrockengewicht pro Flächeneinheit auf dem beschichteten Teil zwischen 5 und 50 g/m² ist.

7. Verwendung nach den Ansprüchen 4 - 5, wobei die Länge des Klebebandes, gemessen in der MD-Längsrichtung des Bandes, kleiner als oder gleich 25% bezüglich der Gesamtlänge des Etiketts ist.

8. Verwendung nach den Ansprüchen 1.- 7, wobei die Breite der Kunststofffolien-Klebebänder zwischen 2 cm und 50 cm ist.

9. Verwendung nach den Ansprüchen 1 - 8, wobei die Etikettenschneidlänge zwischen 10 cm und 1 m ist.

10. Verwendung nach den Ansprüchen 1 bis 9, wobei die Flächen mit Klebstoff, die im Register mit der Etikettenschneidlänge wiederholt werden, eine Länge in MD zwischen 1 cm und 10 cm aufweisen.

11. Verwendung nach Anspruch 4, wobei die wässrigen Klebstoffemulsionen wässrige Emulsionen von Acrylpolymeren sind.

## Revendications

1. Utilisation pour des procédés d'étiquetage par « rouleau d'alimentation" de bandes adhésives de film plastique composés de polymères de polypropylène biorientés et thermorétractables, avec l'application d'un adhésif autocollant selon des sections transversales par rapport au sens de déroulement du rouleau ou de la direction longitudinale de la bande, ou selon des zones définies, pour étiqueter des récipients ou divers types d'articles sur des chaînes de fabrication à haute vitesse, supérieure à 6000 emballages/heure, avec moins de 2 % de déchet.
dans laquelle les polymères de polypropylène sont des homopolymères et/ou des copolymères de propylène avec de l'éthylène et/ou des α-oléfines linéaires ou ramifiées, ayant un nombre d'atomes de carbone entre 4 et 10.
L'utilisation comprenant les étapes suivantes :
1) le déroulement du rouleau de film plastique imprimé recouvert d'un adhésif autocollant selon des sections transversales par rapport à la direction de la bande, ou au niveau de secteurs définis ;
2) la découpe de la bande pour obtenir l'étiquette ;
3) l'application de l'étiquette sur le récipient ;
4) la thermorétraction de l'étiquette en passant l'article étiqueté dans un four de thermorétraction à des températures entre 60°C et 200°C ;
dans laquelle pour dérouler le rouleau et appliquer l'étiquette, les parties mobiles de l'équipement utilisé qui sont en contact avec l'adhésif «autocollant » possèdent une surface antiadhésive,
dans laquelle les films plastiques sont thermorétractables de manière uniaxiale en MD, dans laquelle les valeurs de thermorétraction en MD, déterminées par le test de thermorétraction OPMA TC 4 (Oriented Polypropylene Manufacturers Association) (130°C - 5 minutes à l'air), sont comprises entre 5% et 70 %,
dans laquelle la chaleur de l'étiquette se rétracte après son application, tandis que le paquet étiqueté passe dans le tunnel de thermorétractation pour obtenir une conformation de marquage adhérant aux surfaces concaves, convexes ou irrégulières.

2. Utilisation selon la revendication 1, dans laquelle le film plastique est à base d'un homopolymère, et la surface à recouvrir avec l'adhésif est traitée par effet corona, par plasma ou à la flamme.

3. Utilisation selon les revendications 1 à 2, dans laquelle le film plastique possède une masse volumique dans la plage allant de 0,850 à 0,950 g/cm³.

4. Utilisation selon les revendications 1 à 3, dans laquelle les adhésifs « autocollants » sont des émulsions adhésives aqueuses.

5. Utilisation selon la revendication 4, dans laquelle la viscosité des émulsions adhésives aqueuses est entre 0,05 et 1 Pa.s (50 à 1000 cP) à une température d'application située entre 0°C et 60°C.

6. Utilisation selon les revendications 4 à 5, dans laquelle le poids de l'adhésif sec par unité de surface sur la partie recouverte est de 5 à 50 g/m².

7. Utilisation selon les revendications 4 à 5, dans laquelle la longueur de la bande rendue adhésive, mesurée dans la direction longitudinale MD de la bande, est inférieure ou égale à 25% par rapport à la longueur totale de l'étiquette.

8. Utilisation selon les revendications 1 à 7, dans laquelle la largeur des bandes adhésives de film plastique est de 2 cm à 50 cm.

9. Utilisation selon les revendications 1 à 8, dans laquelle la longueur de découpe de l'étiquette est comprise entre 10 cm et 1 m.

10. Utilisation selon les revendications 1 à 9, dans laquelle les zones avec adhésif successives qui coïncident avec la longueur de découpe de l'étiquette ont une longueur en MD entre 1 cm et 10 cm.

11. Utilisation selon la revendication 4, dans laquelle les émulsions adhésives aqueuses sont des émulsions aqueuses de polymères acryliques.
